# EUROPEAN PATENT SPECIFICATION

(11) **EP 2 523 505 B1**
(45) Date of publication and mention of the grant of the patent: **22.07.2020**
(21) Application number: 10841979.7
(22) Date of filing: 27.12.2010
(51) Int. Cl.: H04W 48/08, H04W 48/18, H04W 4/70, H04W 4/00

(54) **AN ACCESS IMPLEMENTING METHOD AND DEVICE FOR MACHINE TO MACHINE CORE NETWORK**
ZUGANGSIMPLEMENTIERUNGSVERFAHREN UND VORRICHTUNG FÜR EIN MASCHINE-ZU-MASCHINE-KERNNETZWERK
PROCÉDÉ ET DISPOSITIF DE MISE EN OEUVRE D'ACCÈS POUR COEUR DE RÉSEAU DE COMMUNICATION ENTRE MACHINES

(30) Priority: 08.01.2010 CN 201010002395
(43) Date of publication of application: 14.11.2012
(73) Proprietor: ZTE Corporation, Shenzhen, Guangdong 518057 (CN)
(72) Inventor: XIE, Baoguo, Guangdong 518057 (CN); LI, Zhijun, Guangdong 518057 (CN); TAO, Quanjun, Guangdong 518057 (CN)
(74) Representative: South, Nicholas Geoffrey
(86) International application number: PCT/CN2010/080317
(87) International publication number: WO 2011/082636

(56) References cited:
- WO-A1-2009/149759
- WO-A2-2009/092115
- US-A1- 2009 213 834
- US-A1- 2009 217 038
- LG ELECTRONICS: "A Control Plane architecture for machine-type communications", 3GPP DRAFT; S2-096571_MTC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Cabo; 20091116, 16 November 2009 (2009-11-16), XP050397514, [retrieved on 2009-11-10]
- ZTE: "Network improvement scenarios", 3GPP DRAFT; S2-096817_NIMTC NETWORK IMPROVEMENT SCENARIOS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. San Jose Del Cabo, Mexico; 20091116 - 20091120, 10 November 2009 (2009-11-10), XP050630300, [retrieved on 2009-11-10]
- "Machine- to- Machine communications (M2M); Functional architecture;00002v011", ETSI DRAFT; 00002V011, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SmartM2M, no. V0.1.1, 7 January 2010 (2010-01-07), pages 1-18, XP014167463, [retrieved on 2010-01-07]

## Description

### Field of the Invention

The present invention relates to the field of communications, and in particular to a method and an apparatus for implementing an access to a Machine to Machine (M2M) core network.

### Background of the Invention

At present, communication services of M2M have been widely applied gradually, for example, to a logistics system, remote meter reading, smart home and the like. Providers of M2M services mainly develop the M2M services using an existing radio network, such as General Packet Radio Service (GPRS) network, Evolved Packet System (EPS) network and other Packet Switch (PS) networks. Since an M2M service has an obvious difference from a Human to Human (H2H) service, network deployment needs to be optimized, so that optimal network management and network communication quality can be obtained when the M2M service is applied.

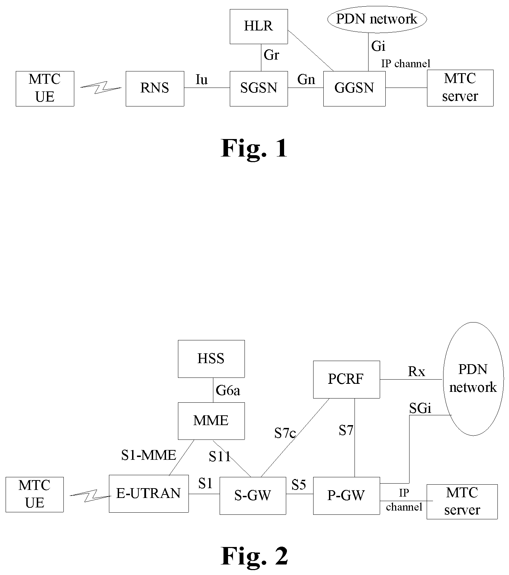

The GPRS network is a second generation mobile communication network based on packet switch. In the third generation mobile communication system, the GPRS is evolved as Universal Mobile Telecommunication System Packet Switch (UMTS PS). Fig. 1 shows a diagram of network architecture of the UMTS PS according to a related art. As shown in Fig. 1, the network architecture comprises the following network elements:
a Radio Network System (RNS), which contains a NodeB and a Radio Network Controller (RNC), wherein the NodeB provides an air interface connection for a terminal; the RNC mainly manages radio resources and controls the NodeB; the RNC is connected with the NodeB through an Iub interface; the terminal accesses a Packet Core network of a Universal Mobile Telecommunication System (UMTS) through the RNS;
a Serving GPRS Support Node (SGSN), which is connected with the RNS through an Iu interface, used for storing routing area location information of a user and taking charge of security and access control;
a Gateway GPRS Support Node (GGSN), which is connected with the SGSN through a Gn interface internally, used for allocating an IP address of a terminal and implementing a gateway function to an external network;
a Home Location Register (HLR), which is connected with the SGSN through a Gr interface and connected with the GGSN through a Gc interface, used for storing user subscription data and an SGSN address in which the user is currently located;
a Packet Data Network (PDN), which is connected with the GGSN through a Gi interface, used for providing a packet-based service network for a user.

In Fig. 1, Machine Type Communication (MTC) User Equipment (UE) needs to transmit data information to an MTC server or other MTC UEs through the GPRS network. The GPRS network establishes an RNC-SGSN-GGSN tunnel for this transmission, wherein the tunnel is based on a GPRS Tunneling Protocol (GTP) and the data information is reliably transmitted through the GTP tunnel.

The proposal of System Architecture Evolution (SAE) is to enable an Evolved Packet System (EPS) to provide higher transmission rate and lower transmission time delay, optimize packet-division and support mobility management among Evolved UTRAN (E-UTRAN), UTRAN, Wireless Local Area Network (WLAN) and other non-3GPP access networks.

Fig. 2 shows a diagram of a network system architecture of an EPS according to a related art. As shown in Fig. 2, the network element, i.e. Evolved NodeB (eNodeB), contained in an Evolved Radio access network (E-RAN) is used for providing radio resources for the access of a user. A Packet Data Network (PDN) is a network for providing services for a user. The EPC provides lower time delay and allows the access of more radio access systems, wherein the EPC comprises the network elements as follows.

A Mobility Management Entity (MME) is a control plane function entity and a server for temporarily storing user data, and is responsible for managing and storing a context of a UE (for example, user identifier, mobility management state, user security parameters and the like), allocating a temporary identifier for a user, and authenticating a user when a UE constantly resides in the tracking area or the network.

A Serving Gateway (SGW or S-GW) is a user plane entity and is responsible for processing routing of user plane data, terminating downlink data of a UE in an idle (ECM IDLE) state, and managing and storing an SAR bearer context of a UE (for example, IP bearer service parameters, network internal routing information and the like). The SGW acts as an anchor of the user plane in the 3GPP system, and one user can have only one SGW at the same time.

A PDN Gateway (PGW or P-GW) is a gateway taking charge of the access of a UE to the PDN, also is a mobility anchor of 3GPP and non-3GPP access systems, and is used to allocate an IP address of a user; the function of the PGW also comprises policy enforcement and charging support. A user can access a plurality of PGWs at the same time. A Policy and Charging Enforcement Function (PCEF) also is located in the PGW.

A Policy and Charging Rules Function (PCRF) is responsible for providing policy control and charging rules for the PCEF.

A Home Subscriber Server (HSS) is responsible for storing user subscription data permanently. The content stored by the HSS comprises an International Mobile Subscriber Identification (IMSI) of a UE, and the IP address of the PGW.

Physically, the SGW and the PGW can be integrated; the user plane network element of the EPC system comprises the SGW and the PGW.

An MTC server is mainly responsible for information collection and data storage/process of an MTC UE and can perform necessary management for the MTC UE.

An MTC UE generally is responsible for gathering information of a number of collectors and accesses a core network through an RAN node to interact data with an MTC Server.

In Fig. 2, the MTC UE needs to transmit data information to the MTC Server or other MTC UEs through the EPS network. The SAE network establishes a GTP tunnel between the SGW and the PGW for this transmission and the data information is reliably transmitted through the GTP tunnel.

Fig. 3 shows a flowchart of a UE accessing an EPS network to perform an attachment procedure according to a related art. As shown in Fig. 3, the related attachment process mainly comprises the following steps (Step 301 to Step 318).

Step S301: in order to access an SAE network, the UE initiates a network attachment request to an eNodeB, wherein the request carries information such as IMSI, network access capability of the UE, and indication of requesting allocation of IP.

Step S302: the eNodeB selects for the UE an MME serving the UE and forwards the attachment request to the MME, and meanwhile carries important information, such as UE identifier, to the MME.

Step S303: the MME sends an authentication data request message (containing IMSI) to an HSS; the HSS first judges subscription data corresponding to the IMSI, if no subscription is found or the IMSI has been added to a black list, the HSS returns an authentication data response carrying an appropriate error cause to the MME; if the subscription data corresponding to the IMSI are found, the HSS returns an authentication data response message (containing authentication vector) to the MME.

The MME executes the authentication process to verify the legality of the IMSI of the terminal, and executes a security mode process to enable a secure connection.

Step S304: the MME sends a location update request message to the HSS of the home network to notify the area that the UE currently accesses, wherein the request message carries the identifier of the MME and the identifier of the UE.

Step S305: the HSS finds out the subscription user data of the UE according to the identifier of the UE and sends the subscription user data to the MME, wherein the user data mainly comprise information such as default Access Point Name (APN) and bandwidth size.

It should be noted that the MME receives the data, checks whether the UE is allowed to access the network and returns a user accepted response to the HSS; if the MME finds that the UE has problems such as roaming limit or access limit, the MME would forbid the attachment of the UE and notify the HSS.

Step S306: the HSS sends a location update acknowledgement response to the MME.

Step S307: the MME selects one S-GW for the UE and sends a default bearer establishment request to the S-GW, wherein the request contains necessary information which the MME notifies the S-GW, such as the identifier of the UE, the identifier of the MME, the indication of allocating an IP address for the UE, default bandwidth information, and PDN GW address.

Step S308: the S-GW sends a default bearer establishment request to the PDN GW, wherein the request contains necessary information which the S-GW notifies the PDN GW, such as the address of the S-GW, default bandwidth information, and the indication of allocating an IP address for the UE.

Step S309: if necessary, the PDN GW requests a PCRF to configure policy and charging rules, and decision information for the UE.

Step S310: the PDN GW establishes a default bearer according to the policy and charging rules and decision information returned from the PCRF, and returns a bearer establishment response to the S-GW.

Step S311: the S-GW sends a default bearer establishment response to the MME.

Step S312: the MME sends an attachment accepted response to the eNodeB, indicating that the request of attaching the UE to the network is accepted, wherein the response carries the address of the SGW and a Tunnel Endpoint Identifier (TEID).

Step S313: the eNodeB sends a voice bearer establishment request to the UE, requiring the UE to store the important information of the bearer establishment and open a corresponding port, wherein the message carries information such as bearer network ID, PDN GW address, IP address allocated to the UE and bandwidth information.

Step S314: the UE sends a radio bearer establishment response to the eNodeB.

Step S315: the eNodeB notifies the MME that the attachment procedure is completed.

Step S316: the MME sends a bearer update request to the S-GW, to notify the identifier and address of the eNodeB serving the UE.

Step S317: the S-GW sends a bearer update response to the MME.

Step S318: if the PDN GW is not specified by the HSS, the MME sends a location update request to the HSS, to notify the HSS of the address information of the PDN GW serving the UE; the HSS updates the information.

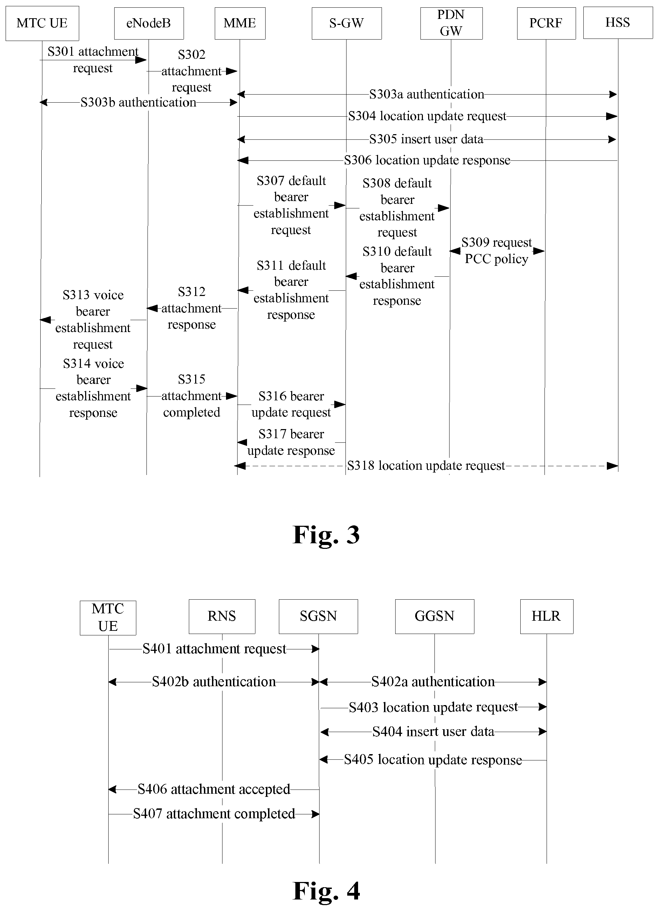

Fig. 4 shows a flowchart of a UE accessing a GPRS network to perform an attachment procedure according to a related art. As shown in Fig. 4, the related attachment process mainly comprises the following steps (Step 401 to Step 407).

Step S401: a user initiates an attachment request message to an SGSN through an RNS for the first time, wherein the request message carries parameters such as attachment type and IMSI; the RNS routes the message to the SGSN according to the load condition of the RNS, with the IMSI of the user as request identification.

Step S402: the SGSN requests an HLR to authenticate the IMSI; the HLR downloads authentication parameters according to the IMSI; and the SGSN authenticates the UE.

Step S403: the SGSN sends a location update request to the HLR, wherein the request carries parameters such as SGSN number and address, and IMSI.

Step S404: the HLR downloads subscription data corresponding to the IMSI for the SGSN; the SGSN performs an access control check for the ME to check whether the UE has an area limit or access limit, and then returns a data insertion response to the HLR.

Step S405: the HLR confirms the location update message and sends a location update response to the SGSN. At this moment, if the location update request is rejected by the HLR, the SGSN would reject the attachment request of the UE.

Step S406: the SGSN allocates a Packet-Temporary Mobile Subscriber Identity (P-TMSI) for the user, and then sends to the UE an attachment accepted message carrying information such as the P-TMSI allocated for the UE.

Step S407: if the P-TMSI is updated, the Mobile Station (MS) returns an attachment completed message to the SGSN to confirm; the GRPS attachment procedure is completed.

According to the existing PS network architecture described in Fig. 1 and Fig. 2, and the processes of the existing terminal attaching to a network shown in Fig. 3 and Fig. 4, the existing terminal equipment, such as a cell phone, can receive a radio signal transmitted from a radio access network and attach to the network of an operator through the radio access network, and then carry out services such as a voice call.

The M2M service is a global machine type communication service which is just rising and is gradually put on the industrialization agenda. The M2M service enables each industry and each individual to enjoy the convenience of information service anytime and anywhere, by collecting information data through an M2M terminal in a sensor network and then transmitting the information data through the network. The M2M can be widely applied to industry applications, family applications, individual applications and so on. In the industry applications, the service comprises traffic monitoring, smart electric network, building alarm, sea rescue, vending machine, drive pay and so on. In the family applications, the service comprises automatic meter reading, temperature control and so on. In the individual applications, the service comprises life detection, remote diagnosis and so on.

The communication objects of the M2M are machine to machine, and man to machine. The data communication between one or more machines is defined as Machine Type Communication (MTC), and this condition needs few man-machine interactions. A machine participating in the MTC is defined as MTC equipment. The MTC equipment is a terminal of an MTC user, and this terminal can communicate with MTC equipment and an MTC server through a Public Land Mobile Network (PLMN) network. Mobile Equipment (ME) is an additional functional module of the MTC equipment, and the functional module is configured to enable the MTC equipment to access a radio network (for example, EPS network, GPRS network and the like). The MTC server manages and monitors the MTC equipment.

Since the MTC equipment mostly is the equipment of a specific application in different scenes, the MTC equipment is various in types and huge in number, for example, the equipment used in automatic meter reading is different from that used in life detection. Meanwhile, the MTC equipment also has different features due to different applications, for example, elevator equipment such as a lift has low mobility and PS only attribute, while a monitor and alarm equipment has features such as low-data-amount transmission and high availability, besides low mobility and PS only attribute. Therefore, the M2M equipment has many aspects different from the H2H equipment in application, specifically comprising: (1) the M2M terminals are huge in number, far more than the H2H terminals in quantity; thus, the terminal identification may not use the IMSI identification defined by the existing H2H terminal; (2) the M2M terminal is mainly for the application with low mobility and more than 90% of the M2M terminals are immoveable; thus, it has a big difference from the related art in mobility management (for example, the network does not need to perform location update process frequently); (3) the M2M terminal is mainly for the application with low data amount, which has a big difference from the services with high-bandwidth channel provided by the existing network; thus, the transmission mode of the network in the aspect of low data amount has a big difference from the related art; (4) other aspects, for example, the network needs to process the MTC equipment group and meet the requirement of each feature of the MTC terminal, for example, time control, MTC monitor and the like; all the above can only be satisfied by optimizing the existing network.

With the increasing use of the M2M applications, the mass development of the M2M terminals in quantity and the M2M application mode have a great difference from the existing H2H application; therefore, for different operators, the adoption of the existing network can not meet the requirement of the M2M services. Since the load of the existing network can not meet the requirement of the future M2M services, the operators need to optimize and deploy the network so as to meet the growing requirement of the M2M applications.

LG ELECTRONICS: "A Control Plane architecture for machine-type communications", 3GPP DRAFT; S2-096571_MTC, 3RD GENERATION PARTNERSHIP PROJECT (3GPP), MOBILE COMPETENCE CENTRE; 16 November 2009, XP050397514, discloses a control plane architecture for machine-type communications.

### Summary of the Invention

In view of the problems in the related art that the mass development of the M2M terminals in quantity and the M2M application mode have a great difference from the existing H2H application and the existing network can not meet the requirement of the M2M services, the present invention provides a method and an apparatus according to claims 1 and 5 for implementing an access to an M2M core network, which at least solve one of the problems above.

According to one aspect of the present invention, a method for implementing an access to an M2M core network is provided.

The method for implementing the access to the M2M core network according to the present invention comprises: receiving, by a network element, an access request message carrying equipment identity indication information, wherein the access request message is initiated by terminal equipment; determining, by the network element, that the terminal equipment is M2M equipment according to the equipment identity indication information; and selecting, by the network element, a corresponding M2M core network for the terminal equipment to implement the access of the terminal equipment.

According to another aspect of the present invention, an apparatus for implementing an access to an M2M core network is provided.

The apparatus for implementing the access to the M2M core network according to the present invention comprises: a receiving unit, configured to receive an access request message carrying equipment identity indication information, wherein the access request message is initiated by terminal equipment; a determination unit, configured to determine that the terminal equipment is M2M equipment according to the equipment identity indication information; and an implementation unit, configured to select a corresponding M2M core network for the terminal equipment to implement the access of the terminal equipment.

With the present invention, a dedicated M2M core network, which serves the M2M services particularly, is provided, thereby solving the problem in the relevant art that the adoption of the existing network can not meet the requirement of the M2M service; thus, the existing network can meet the M2M service requirement while still providing services for existing H2H equipment, without any need of enhancement and mass expansion.

### Brief Description of the Drawings

Drawings, provided for further understanding of the present invention and forming a part of the specification, are used to explain the present invention together with embodiments of the present invention rather than to limit the present invention, wherein:
Fig. 1 shows a diagram of a network system architecture of a UMTSPS according to a related art;
Fig. 2 shows a diagram of a network system architecture of an EPS according to a related art;
Fig. 3 shows a flowchart of a UE performing an attachment procedure in an EPS network according to a related art;
Fig. 4 shows a flowchart of a UE performing an attachment procedure in a GPRS network according to a related art;

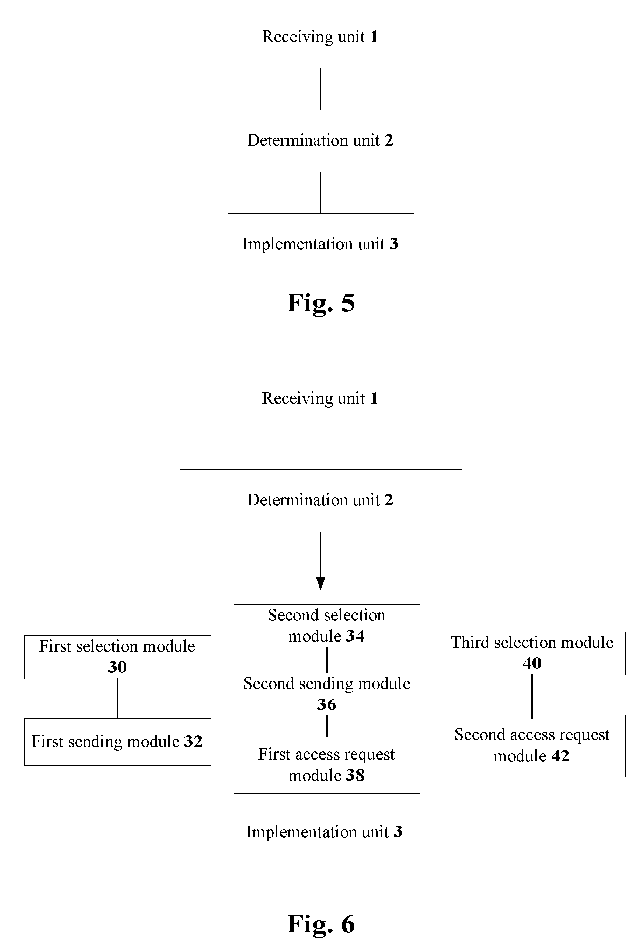

Fig. 5 shows a structure diagram of an apparatus for implementing an access to an M2M core network according to an embodiment of the present invention;
Fig. 6 shows a structure diagram of an apparatus for implementing an access to an M2M core network according to a preferable embodiment of the present invention;

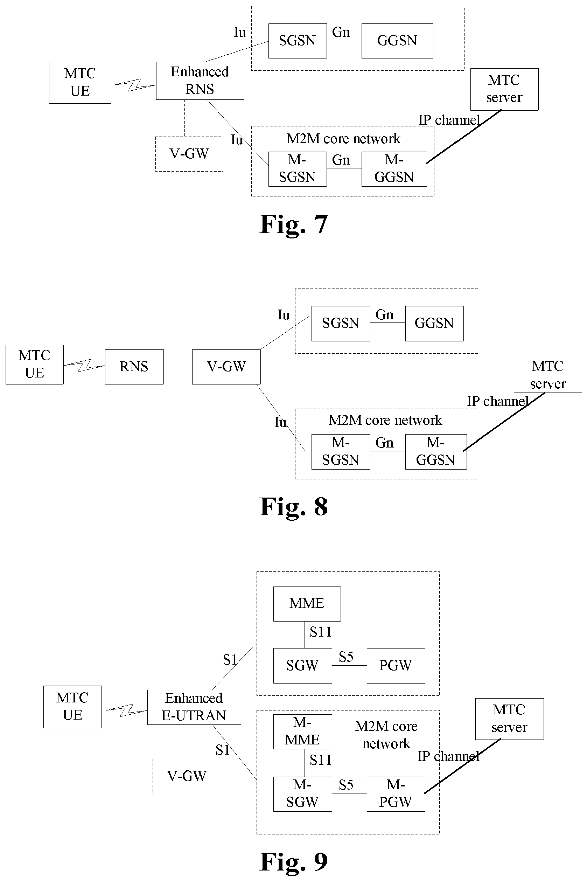

Fig. 7 shows a diagram of a first architecture of implementing an M2M service by adopting an M2M core network to share a radio access network in a GPRS network according to an embodiment of the present invention;
Fig. 8 shows a diagram of a second architecture of implementing an M2M service by adopting an M2M core network to share a radio access network in a GPRS network according to an embodiment of the present invention;
Fig. 9 shows a diagram of a third architecture of implementing an M2M service by adopting an M2M core network to share a radio access network in an EPS network according to an embodiment of the present invention;

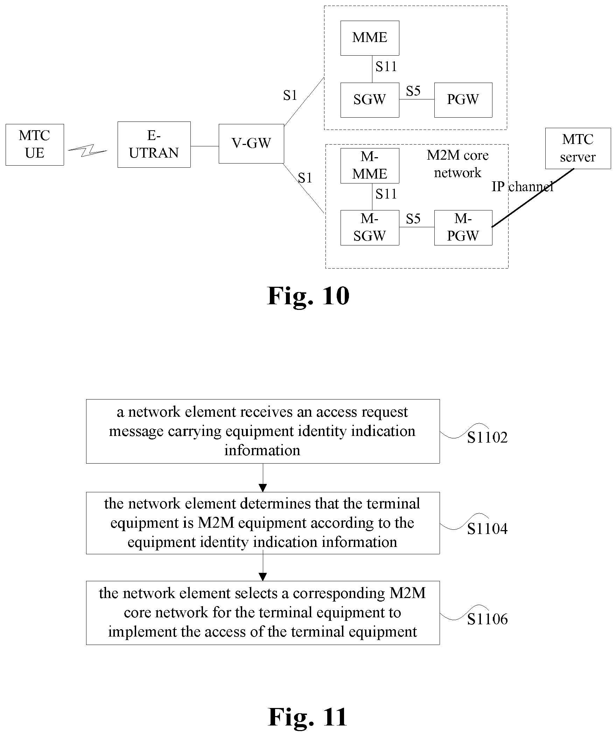

Fig. 10 shows a diagram of a fourth architecture of implementing an M2M service by adopting an M2M core network to share a radio access network in an EPS network according to an embodiment of the present invention;
Fig. 11 shows a flowchart of a method for implementing an access to an M2M core network according to an embodiment of the present invention;

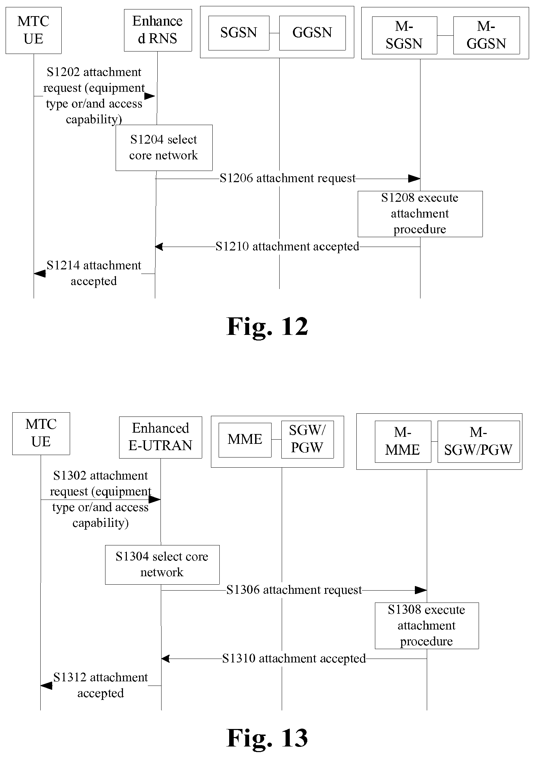

Fig. 12 shows a flowchart of an MTC UE performing an attachment procedure to an M2M core network through an existing radio access network by adopting Mode 1 in a GPRS network according to an Embodiment 1 of the present invention;
Fig. 13 shows a flowchart of an MTC UE performing an attachment procedure to an M2M core network through an existing radio access network by adopting Mode 1 in an EPS network according to an Embodiment 2 of the present invention;

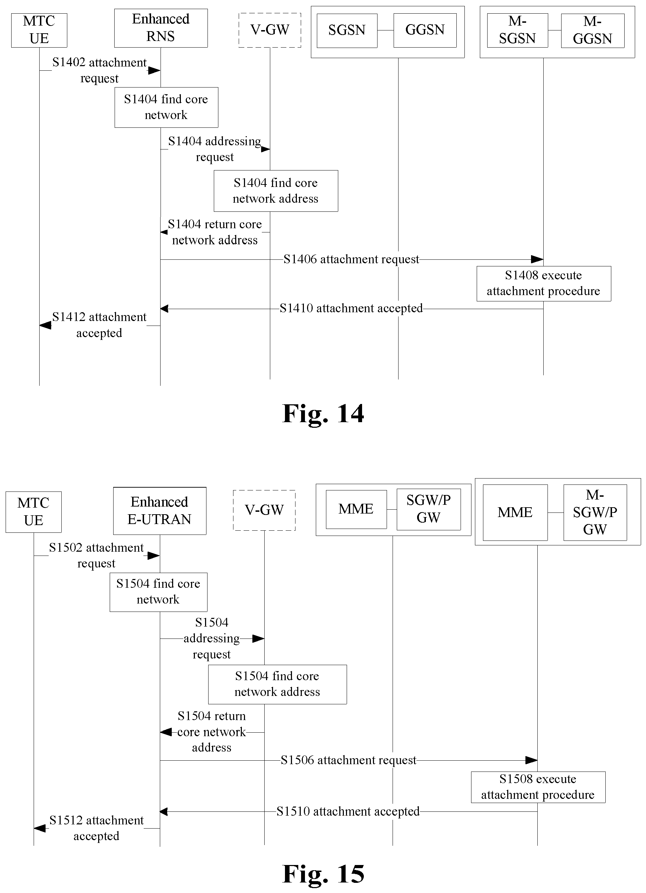

Fig. 14 shows a flowchart of an MTC UE performing an attachment procedure to an M2M core network through an existing radio access network by adopting Mode 2 in a GPRS network according to an Embodiment 3 of the present invention;
Fig. 15 shows a flowchart of an MTC UE performing an attachment procedure to an M2M core network through an existing radio access network by adopting Mode 2 in an EPS network according to an Embodiment 4 of the present invention;

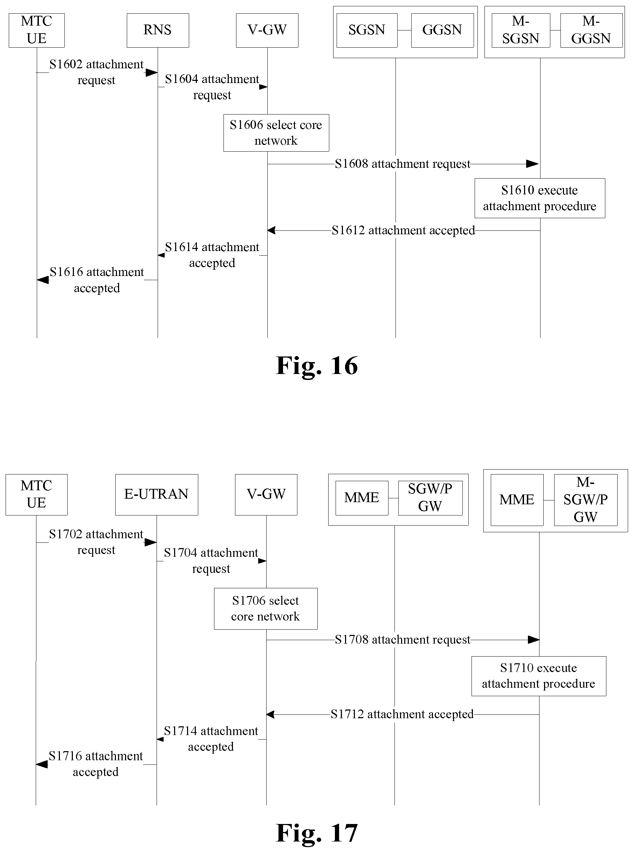

Fig. 16 shows a flowchart of an MTC UE performing an attachment procedure to an M2M core network through an existing radio access network by adopting Mode 3 in a GPRS network according to an Embodiment 5 of the present invention; and
Fig. 17 shows a flowchart of an MTC UE performing an attachment procedure to an M2M core network through an existing radio access network by adopting Mode 3 in an EPS network according to an Embodiment 6 of the present invention.

### Detailed Description of the Embodiments

The present invention is described below in detail by reference to the accompanying drawings in conjunction with embodiments. It should be noted that the embodiments in the application and the characteristics in the embodiments can be mutually combined if no conflict is caused.

For an operator, there are two modes of deploying a network to meet an M2M service. One mode is: updating the existing network to meet various application requirements of M2M terminals, with the cost of updating the entire network. The other mode is: overlapping a dedicated M2M core network in the existing network to process the M2M service particularly, thereby meeting various requirements of M2M applications.

According to an embodiment of the present invention, an apparatus for implementing an access to an M2M core network is provided.

In the embodiment of the present invention, a dedicated M2M core network is adopted to meet the requirement of the M2M service.

Fig. 5 shows a structure diagram of an apparatus for implementing an access to an M2M core network according to an embodiment of the present invention. As shown in Fig. 5, the apparatus comprises: a receiving unit 1, a determination unit 2 and an implementation unit 3.

The receiving unit 1 is configured to receive an access request message carrying equipment identity indication information, wherein the access request message is initiated by terminal equipment.

The determination unit 2 is configured to determine that the terminal equipment is M2M equipment according to the equipment identity indication information.

The implementation unit 3 is configured to select a corresponding M2M core network for the terminal equipment to implement the access of the terminal equipment.

For a dedicated M2M core network overlapped in the existing network, this apparatus can implement the access of an M2M terminal to the dedicated M2M core network, and the existing network can meet the requirement of the M2M service while still providing services for existing H2H equipment, without any need of enhancement and mass expansion.

The equipment identity indication information comprises but is not limited to at least one of the following: equipment type information, equipment access capability information and equipment identification information (for example, IMSI number segment, Mobile Station Integrated Services Digital Network (MSISDN) number segment, Access Point Name (APN)).

Preferably, the network element can be one of the following: an enhanced radio access network and a virtual gateway.

In the above, the enhanced radio access network refers that the existing radio access network is enhanced, and the enhanced radio access network possesses a capability of determining whether the terminal equipment is M2M equipment according to the equipment identity indication information.

The process of implementing the access of the M2M terminal to the M2M core network by the above apparatus comprises but is not limited to the following three implementation modes. Mode 1: the apparatus can be an enhanced radio access network that can identify whether the terminal equipment is an M2M terminal or an H2H terminal according to the terminal equipment type and/or the access capability, and select a corresponding core network to perform the access process. Mode 2: the apparatus can be a virtual gateway logic network element that accomplishes the selection of the core network, wherein the virtual gateway can be integrated into the radio access network, also can be deployed as a separate entity. Mode 3: the apparatus can be a virtual gateway, wherein the virtual gateway serves as a proxy server and is located between the radio access network and the core network; all relevant information of the radio access network is sent to the virtual gateway; and the virtual gateway is adopted to select a corresponding core network and forward signalling.

In a specific implementation process, based on different apparatuses, the modules included in the implementation unit 3 are different. Fig. 6 shows a structure diagram of an apparatus for implementing an access to an M2M core network according to a preferable embodiment of the present invention; as shown in Fig. 6, different apparatuses are illustrated below.

For the Mode 1, that is, the apparatus is an enhanced radio access network (for example, enhancing an eNodeB in an EPS network, or, enhancing an RNC in a GPRS network), the implementation unit 3 of the apparatus comprises: a first selection module 30, configured to select a corresponding first core network address for the terminal equipment according to information of a preconfigured corresponding relationship between a terminal equipment identity and the M2M core network; and a first sending module 32, configured to initiate an access request to the corresponding M2M core network according to the first core network address.

For the Mode 2, that is, the apparatus is a virtual gateway, the implementation unit 3 of the apparatus comprises: a second selection module 34, configured to select a corresponding second core network address for the terminal equipment according to information of a preconfigured corresponding relationship between a terminal equipment identity and the M2M core network; a second sending module 36, configured to send the second core network address to the radio access network; and a first access request module 38, configured to initiate an access request to the corresponding M2M core network according to the second core network address.

For the Mode 3, that is, the apparatus is a virtual gateway, the implementation unit 3 of the apparatus comprises: a third selection module 40, configured to select a corresponding third core network address for the terminal equipment according to information of a preconfigured corresponding relationship between a terminal equipment identity and the M2M core network; and a second access request module 42, configured to initiate an access request to the corresponding M2M core network according to the third core network address.

Preferably, for the Mode 3, when the apparatus is a virtual gateway, this apparatus is equivalent to a proxy server and forwards a signalling message between the radio access network and the M2M core network. That is, the virtual gateway sends all signalling messages come from the radio access network to the M2M core network, and sends all signalling messages come from the M2M core network to the radio access network.

In the above three implementation modes, the Mode 1 does not need to make a big change to the original system architecture, only needing to enhance the existing radio access network, wherein the enhanced radio access network can identify whether the terminal equipment is an M2M terminal or an H2H terminal according to the terminal equipment type or/and the access capability, and select a corresponding core network to process. Compared with the existing GPRS or EPS network, a dedicated M2M core network, which particularly takes charge of the core network functions, such as the access of the M2M terminal, mobility management and bearer establishment, is added.

Compared with the Mode 1, the Mode 2 and the Mode 3 make a comparatively big change to the system architecture; and description is provided below in conjunction with embodiments.

Fig. 7 shows a diagram of a first architecture of implementing an M2M service by adopting an M2M core network to share a radio access network in a GPRS network according to an embodiment of the present invention. As shown in Fig. 7, compared with the existing GPRS network described in Fig. 1, an M2M core network is added, wherein the M2M core network comprises an M-SGSN and an M-GGSN.

The function of the M-SGSN is similar to that of the SGSN in the existing network. The M-SGSN, also connected with an RNS through an Iu interface, is used for storing routing area location information of a user and taking charge of security and access control. However, the M-SGSN only takes charge of the M2M service, but not the H2H service; therefore, functions such as mobility management for the H2H terminal are simplified, meanwhile, an enhancement is made to meet the functions of the M2M service, for example, meeting the requirements of functions such as low mobility management of an M2M terminal, identification of an M2M terminal identifier and a group identifier, conduction of a time control on the access, group management of the M2M terminal, satisfaction of the transmission mode of low data amount of the M2M terminal, particular charging requirements and so on.

The function of the M-GGSN is similar to that of the GGSN in the existing network. The M-GGSN, connected with the M-SGSN through a Gn interface internally, is used for allocating an IP address of a terminal and implementing a gateway function to an external network. However, the M-GGSN only takes charge of the M2M service, but not the H2H service; therefore, functions such as bearer establishment and charging for the H2H terminal are optimized, meanwhile, an enhancement is made to meet the functions of the M2M service, for example, meeting the requirements of functions such as group charging of the M2M terminal, group policy allocation, group maximum transmission bit rate limit, equipment level of network load control, transmission of low data amount and so on.

In order to meet the requirement of the M2M core network sharing a radio access network with the existing core network, a logic network element is needed to find the address of the core network; therefore, a Virtual GW (V-GW) is designed in the network to act as an address selection server, which is responsible for selecting a core network corresponding to the terminal. Specifically, the V-GW can judge whether the equipment is M2M equipment according to indications such as an IMSI number segment of the terminal, an MSISDN number segment, an APN (for example, an MTC UE adopts the full domain name of MTC.TAI.MCC.MNC.3GPP.XXX), the equipment type, the equipment access capability and so on, and then select a corresponding core network address. The V-GW is a logic network element, which can be integrated into the radio access network or can be deployed as a separate network element entity. When the V-GW is integrated into the radio access network, an MTC UE initiates an attachment request; the V-GW can identify whether the equipment of the MTC UE is H2H equipment or M2M equipment according to the equipment identifier, and thus select a core network address; then the radio access network can send the attachment request to the corresponding core network.

Fig. 8 shows a diagram of a second architecture of implementing an M2M service by adopting an M2M core network to share a radio access network in a GPRS network according to an embodiment of the present invention. As shown in Fig. 8, compared with the first architecture, an M2M core network, an M-SGSN and an M-GGSN are added in the existing GPRS network. The functions of the M-SGSN and the M-GGSN are the same as that described in the first architecture, and no further description is needed here. The difference lies in the function of the V-GW In the first architecture, the V-GW is responsible for selecting a core network. However, in the second architecture, the V-GW is located between the radio access network and the core network, only the address of the V-GW is configured in the radio access network, all signalling of the radio access network is forwarded to the core network through the V-GW, and all signalling transmitted from the core network to the radio access network is forwarded to the radio access network through the V-GW too. As a proxy server, the V-GW can judge whether a terminal is an M2M terminal or an H2H terminal when the terminal is attached, then the V-GW selects a corresponding core network and forwards all signalling messages, comprising an attachment message, from the radio access network to the selected core network. The V-GW can be integrated into the radio access network to act as a logic function module, also can exist as a separate network element entity.

Fig. 9 shows a diagram of a third architecture of implementing an M2M service by adopting an M2M core network to share a radio access network in an EPS network according to an embodiment of the present invention. As shown in Fig. 9, compared with the existing EPS network described in Fig. 2, an M2M core network is added, wherein the M2M core network comprises an M-MME and an M-SGW/M-PGW.

The function of the M-MME is similar to that of the MME in the existing EPS network. The M-MME acts as a control plane function entity in the M2M core network and a server for temporarily storing user data, and is responsible for managing and storing a context of a UE (for example, user identifier, mobility management state, user security parameters and the like), allocating a temporary identifier for a user, and authenticating the user when a UE constantly resides in the tracking area or the network. However, the M-MME only takes charge of the M2M service, but not the H2H service; therefore, functions such as mobility management for the H2H terminal are simplified, meanwhile, an enhancement is made to meet the functions of the M2M service, for example, meeting the requirements of functions such as low mobility management of an M2M terminal, identification of an M2M terminal identifier and a group identifier, conduction of a time control on the access, group management of the M2M terminal, satisfaction of the transmission mode of low data amount of the M2M terminal, particular charging requirements and so on.

The function of the M-SGW/M-PGW is similar to that of the SGW/PGW in the existing EPS network. The M-SGW acts as a user plane anchor and is responsible for processing data routing of the user plane and terminating downlink data of a UE in an idle (ECM IDLE) state. The M-PGW acts as a gateway through which the UE accesses the PDN, and is responsible for managing an IP address of a user, storing an SAR bearer context of a UE, and implementing functions such as policy enforcement and charging support. However, the M-SGW/PGW only takes charge of the M2M service, but not the H2H service; therefore, functions such as bearer establishment and charging for the H2H terminal are optimized, meanwhile, an enhancement is made to meet the functions of the M2M service, for example, meeting the requirements of functions such as group charging of the M2M terminal, group policy allocation, group maximum transmission bit rate limit, equipment level of network load control, transmission of low data amount and so on.

In order to meet the requirement of the M2M core network sharing a radio access network with the existing core network, a logic network element is needed to find the address of the core network; therefore, a Virtual Gateway (V-GW) is designed in the network to act as an address selection server, which is responsible for selecting a core network corresponding to the terminal. Specifically, the V-GW can judge whether the equipment is M2M equipment according to indications such as an IMSI number segment of the terminal, an MSISDN number segment, an APN (for example, an MTC UE adopts the full domain name of MTC.TAI.MCC.MNC.3GPP.XXX) and so on, and then select a corresponding core network address. The V-GW is a logic network element, which can be integrated into the radio access network or can be deployed as a separate network element entity. When the V-GW is integrated into the radio access network, an MTC UE initiates an attachment request; the V-GW can identify whether the equipment of the MTC UE is H2H equipment or M2M equipment according to the equipment identifier, and thus select a core network address; then the radio access network can send the attachment request to the corresponding core network.

Fig. 10 shows a diagram of a fourth architecture of implementing an M2M service by adopting an M2M core network to share a radio access network in an EPS network according to an embodiment of the present invention. As shown in Fig. 10, compared with the third architecture described in Fig. 9, an M2M core network, an M-MME and an M-SGW/M-PGW are added in the existing EPS network. The functions of the M-MME and the M-SGW/M-PGW are the same as that described in the third architecture, and no further description is needed here. The difference lies in the function of the V-GW In the third architecture, the V-GW is responsible for selecting a core network. However, in the fourth architecture, the V-GW is located between the eNodeB in the radio access network and the core network; in the eNodeB, only the address of the V-GW is configured; all signalling of the eNodeB is forwarded to the core network through the V-GW, and all signalling transmitted from the core network to the eNodeB is forwarded to the radio access network through the V-GW too. As a proxy server, the V-GW can judge whether a terminal is an M2M terminal or an H2H terminal when the terminal is attached, then the V-GW selects a corresponding core network and forwards all signalling messages, comprising an attachment message, from the radio access network to the selected core network. The V-GW can be integrated into the eNodeB to act as a logic function module, also can exist as a separate network element entity.

According to an embodiment of the present invention, a method for implementing an access to an M2M core network is provided.

Fig. 11 shows a flowchart of a method for implementing an access to an M2M core network according to an embodiment of the present invention. As shown in Fig. 11, the implementation method comprises the following processing steps (Step 1102 to Step 1106):
Step 1102: a network element receives an access request message carrying equipment identity indication information, wherein the access request message is initiated by terminal equipment;
Step 1104: the network element determines that the terminal equipment is M2M equipment according to the equipment identity indication information; and
Step 1106: the network element selects a corresponding M2M core network for the terminal equipment to implement the access of the terminal equipment.

For a dedicated M2M core network overlapped in the existing network, this method can implement the access of an M2M terminal to the dedicated M2M core network, and the existing network can meet the requirement of the M2M service while still providing services for existing H2H equipment, without any need of enhancement and mass expansion.

Preferably, the network element comprises but is not limited to one of the following: a radio access network and a virtual gateway.

For example, the network element can also comprise a server which is able to provide an address of the core network and determine the identity of the terminal equipment.

The equipment identity indication information comprises at least one of the following: equipment type information, equipment access capability information and equipment identification information (for example, IMSI, MSISDN and the like).

The process of implementing the access of the M2M terminal to the M2M core network by the method above comprises but is not limited to the following three implementation modes. Mode 1, an enhanced radio access network is adopted, wherein the enhanced radio access network is able to identify whether the terminal equipment is an M2M terminal or an H2H terminal according to the terminal equipment type and/or the access capability, and select a corresponding core network to process. Mode 2, a virtual gateway logic network element is adopted to accomplish the selection of the core network, wherein the virtual gateway can be integrated into the radio access network, also can be deployed as a separate entity. Mode 3, the virtual gateway serves as a proxy server and is located between the radio access network and the core network; all relevant information of the radio access network is sent to the virtual gateway; and the virtual gateway is adopted to select a corresponding core network and forward a signalling message.

Preferably, for the Mode 1, the network element above is a radio access network, then Step 1106 can further comprise the following processes:
(1) the radio access network selects a corresponding first core network address for the terminal equipment according to information of a preconfigured corresponding relationship between the terminal equipment identity and the M2M core network; and
(2) the radio access network initiates an access request to the corresponding M2M core network according to the first core network address.

According to the Mode 1 of the above three implementation modes, the radio access network needs to be enhanced, so that the radio access network is capable of selecting an existing core network and an M2M core network for the H2H terminal and the M2M terminal respectively. Necessary processes are described below.

Fig. 12 shows a flowchart of an MTC UE performing an attachment procedure to an M2M core network through an existing radio access network by adopting Mode 1 in a GPRS network according to an Embodiment 1 of the present invention. As shown in Fig. 12, in the GPRS network, an M2M core network is overlapped in the existing core network to share the existing radio access network. The radio access network can judge whether the access equipment is H2H equipment or M2M equipment according to the terminal equipment type or the access capability, and then select a corresponding core network address to accomplish the subsequent access processes. The access process mainly comprises the following steps (Step 1202 to Step 1212).

Step 1202: the MTC UE initiates an attachment request message (for example, access request message) to the radio access network, and adds an equipment type indication parameter (that is, equipment type indication information) in the attachment request message through parameter extension.

Preferably, the equipment type indication parameter can be the equipment type for indicating whether the equipment is machine type equipment (MTC equipment) or cell phone type equipment (H2H equipment). The equipment type can further define different types of machine type equipment or different types of cell phone type equipment, which can be defined according to the requirement of operators.

For example, the equipment type of the cell phone type equipment can have a default parameter of null.

Preferably, the equipment type indication parameter also can be the equipment access capability for indicating the machine type communication capability or the cell phone type communication capability, and can be implemented by extending relevant parameters in the field of terminal network capability. The equipment access capability can further define different types of machine type equipment access capabilities or different types of cell phone type access capabilities, which can be defined according to the requirement of operators.

For example, the equipment access capability of the cell phone type equipment can have a default parameter of null.

Step 1204: the radio access network judges whether the equipment is M2M equipment or H2H equipment according to the equipment information parameter, and then selects a corresponding core network, wherein if the equipment is an H2H equipment terminal, the radio access network selects the existing core network; if the equipment is an M2M equipment terminal, the radio access network selects the M2M core network.

Step 1206: the radio access network sends an attachment request to the selected M-SGSN, wherein the attachment request carries important information such as the address of the radio access network, the identifier of the UE, the equipment type of the UE and so on.

Step S1208: after receiving the attachment request of the MTC UE, the M2M core network requests authentication data from an HLR to authenticate the MTC UE, then initiates a location update request to the HLR and downloads user subscription data from the HLR; if the MTC UE has no problems such as access limit, the M2M core network allows the attachment of the MTC UE and performs the subsequent attachment procedure (for example, the M-SGSN can apply to the M-GGSN for operations such as establishment of a PDP context).

Step 1210: the M2M core network allows the access of the MTC UE and returns an attachment accepted message to the radio access network.

Step 1212: the radio access network returns the attachment accepted message to the MTC UE to notify that the MTC UE has been attached to the GPRS network.

Fig. 13 shows a flowchart of an MTC UE performing an attachment procedure to an M2M core network through an existing radio access network by adopting Mode 1 in an EPS network according to an Embodiment 2 of the present invention. As shown in Fig. 13, in the EPS network, an M2M core network is overlapped in the existing core network to share the existing radio access network. The radio access network can judge whether the access equipment is H2H equipment or M2M equipment according to the terminal equipment type and/or the access capability, and then select a corresponding core network address to accomplish the subsequent access processes. The above process mainly comprises the following steps (Step 1302 to Step 1312).

Step 1302: in order to access the EPS network, the UE initiates a network attachment request message to an eNodeB, wherein the request message carries equipment type indication information (equipment type indication parameters) such as IMSI, equipment type indication, network access capability of the UE and indication of requesting allocation of IP.

The equipment type indication parameter can be the equipment type for indicating whether the equipment is machine type equipment (MTC equipment) or cell phone type equipment (H2H equipment). The equipment type can further define different types of machine type equipment or different types of cell phone type equipment, which can be defined according to the requirement of operators.

For example, the equipment type of the cell phone type equipment can have a default parameter of null.

The equipment type indication parameter also can be the equipment access capability for indicating the machine type communication capability or the cell phone type communication capability, and can be implemented by extending relevant parameters in the field of terminal network capability. The equipment access capability can further define different types of machine type equipment access capabilities or different types of cell phone type access capabilities, which can be defined according to the requirement of operators.

For example, the equipment access capability of the cell phone type equipment can have a default parameter of null.

Step 1304: the eNodeB needs to select for the UE one core network serving the UE. The eNodeB judges whether the equipment is M2M equipment or H2H equipment according to the equipment information parameters and then selects a corresponding core network, wherein if the equipment is an H2H equipment terminal, the radio access network selects the MME in the existing core network; if the equipment is an M2M equipment terminal, the radio access network selects the M-MME in the M2M core network.

Step 1306: after selecting for the UE one M-MME serving the UE, the eNodeB forwards the attachment request to the MME, and meanwhile carries important information, such as the access address of the eNodeB, the identifier of the UE, the equipment type of the UE and so on, to the M-MME.

Step 1308: after receiving the attachment request of the MTC UE, the M-MME would request authentication data from an HSS to authenticate the MTC UE. Then the M-MME initiates a location update request to the HSS and downloads user subscription data from the HSS; if the MTC UE has no problems such as access limit, the M-MME allows the attachment of the MTC UE, performs the subsequent attachment procedure and notifies an M-SGW/M-PGW to establish one EPS default bearer for the MTC UE.

Step 1310: the M-MME in the M2M core network sends an attachment accepted response to the eNodeB, indicating that the request of the UE for attaching to the network has been accepted, wherein the response carries the address of the Serving GW and a Tunnel Endpoint Identifier (TEID).

Step 1312: the eNodeB sends a voice bearer establishment request to the UE, requiring the UE to store the important information of the bearer establishment and open a corresponding port. After receiving a radio bearer establishment response from the MTC UE, the eNodeB notifies the MME that the attachment procedure is completed.

It should be noted that Fig. 12 and Fig. 13 are only described by taking an attachment (access) process for example and can be applied to other service processes if no conflict is caused.

According to the two embodiments above, an M2M core network is overlapped in the existing core network to share the existing radio access network. The radio access network can judge whether the access equipment is H2H equipment or M2M equipment according to the terminal equipment type or the access capability, and then select a corresponding core network address to accomplish the subsequent access processes, thereby achieving the effect of occupying no existing core network resources and optimizing the network flow, and meeting the requirement of M2M application.

Preferably, for the Mode 2, the network element is a virtual gateway, then Step 1106 can further comprise the following processes:
(1) the virtual gateway selects a corresponding second core network address for the terminal equipment according to information of a preconfigured corresponding relationship between the terminal equipment identity and the M2M core network;
   during a specific implementation process, before the above Process (1) is executed, the following process is further included: the radio access network requests the second core network address from the virtual gateway, after receiving the access request message from the terminal equipment;
(2) the virtual gateway sends the second core network address to the radio access network;
(3) the radio access network initiates an access request to the corresponding M2M core network according to the second core network address.

Specifically, according to the Mode 2 of the above three implementation modes, a small change is made to the radio access network. This solution needs to add a virtual gateway logic network element, which is adopted to select the core network; namely, the network element in Fig. 11 is the virtual gateway (V-GW) logic network element, wherein the V-GW has a capability of distinguishing an H2H terminal from an M2M terminal and sending the core network address to the existing radio access network. Necessary processes are described below.

Fig. 14 shows a flowchart of an MTC UE performing an attachment procedure to an M2M core network through an existing radio access network by adopting Mode 2 in a GPRS network according to an Embodiment 3 of the present invention. As shown in Fig. 14, in the GPRS network, an M2M core network is overlapped in the existing core network to share the existing radio access network. The radio access network inquires the access address of the core network from the V-GW; the V-GW can judge whether the equipment is H2H equipment or M2M equipment according to relevant information carried by the terminal, such as IMSI, MSISDN, APN, equipment type, access capability and other indications, and then select a corresponding core network address (that is, the second core network address) to accomplish the subsequent access processes. The above process mainly comprises the following steps (Step 1402 to Step 1412).

Step 1402: the MTC UE initiates an attachment request message (access request message) to the radio access network, wherein the attachment request message needs to carry the identifier of the MTC UE, for example, IMSI, MSISDN and the like. Equipment information parameters also can be added in the attachment request message through parameter extension.

Step 1404: if the V-GW is integrated into the radio access network, the V-GW judges whether the equipment is M2M equipment or H2H equipment according to indications, carried in the attachment message, such as the identifier of the MTC UE (for example, IMSI and/or MSISDN), the equipment type and the access capability in the equipment information parameters, and then selects a corresponding core network. If the equipment is an H2H equipment terminal, the V-GW selects and provides the address of the existing core network to the radio access network; if the equipment is an M2M equipment terminal, the V-GW selects and provides the M2M core network to the radio access network.

Optionally, if the V-GW is outside the radio access network, the radio access network initiates an addressing request to the V-GW after receiving the attachment request of the MTC UE, wherein the addressing request carries relevant information of the UE (for example, indications such as the identifier of the UE, the equipment type information of the UE and so on). The V-GW judges whether the equipment is M2M equipment or H2H equipment according to indications, carried in the addressing request, such as the identifier of the MTC UE (for example, IMSI and/or MSISDN), the equipment type and the access capability in the equipment information parameters, and then selects a corresponding core network. If the equipment is an H2H equipment terminal, the V-GW selects and provides the address of the existing core network to the radio access network; if the equipment is an M2M equipment terminal, the V-GW selects and provides the M2M core network to the radio access network; then the V-GW returns the selected core network address to the radio access network.

Step 1406: the radio access network sends the attachment request to the selected M-SGSN, wherein the attachment request carries important information such as the address of the radio access network, the identifier information of the UE, the equipment type of the UE and so on.

Step 1408: after receiving the attachment request of the MTC UE, the M2M core network requests authentication data from an HLR to authenticate the MTC UE, then initiates a location update request to the HLR and downloads user subscription data from the HLR; if the MTC UE has no problems such as access limit, the M2M core network allows the attachment of the MTC UE and performs the subsequent attachment procedure, for example, the M-SGSN can apply to an M-GGSN for operations such as establishment of a PDP context.

Step 1410: the M2M core network allows the access of the MTC UE and returns an attachment accepted message to the radio access network.

Step 1412: the radio access network returns the attachment accepted message to the MTC UE to notify that the MTC UE has been attached to the GPRS network.

Fig. 15 shows a flowchart of an MTC UE performing an attachment procedure to an M2M core network through an existing radio access network by adopting Mode 2 in an EPS network according to an Embodiment 4 of the present invention. As shown in Fig. 15, in the EPS network, an M2M core network is overlapped in the existing core network to share the existing radio access network. The eNodeB in the radio access network inquires the access address of the core network from the V-GW; the V-GW can judge whether the equipment is H2H equipment or M2M equipment according to relevant information carried by the terminal (for example, indications such as IMSI, MSISDN, APN, equipment type and access capability and so on), and then select a corresponding core network address to accomplish the subsequent access processes. The above process comprises the following steps (Step 1502 to Step 1512).

Step 1502: in order to access the EPS network, the UE initiates a network attachment request to the eNodeB, wherein the attachment request carries information such as IMSI, APN, equipment type indication, network access capability of the UE, indication of requesting allocation of IP and so on.

Step 1504: the eNodeB needs to select for the UE one core network serving the UE. If the V-GW is integrated into the eNodeB, the V-GW judges whether the equipment is M2M equipment or H2H equipment according to indications, carried in the attachment message, such as the identifier of the MTC UE (for example, IMSI and/or MSISDN) or the APN, or the equipment type and the access capability in the equipment information parameters, and then selects a corresponding core network. If the equipment is an H2H equipment terminal, the V-GW selects and provides the MME address of the existing core network to the eNodeB in the radio access network; if the equipment is an M2M equipment terminal, the V-GW selects and provides the M-MME address of the M2M core network to the eNodeB in the radio access network.

Optionally, if the V-GW is outside the eNodeB of the radio access network, the eNodeB initiates an addressing request to the V-GW after receiving the attachment request of the MTC UE, wherein the addressing request carries relevant information of the UE (for example, indications such as the identifier of the UE, APN, the equipment information of the UE and so on).

Then, the V-GW judges whether the equipment is M2M equipment or H2H equipment according to indications, carried in the addressing message, such as the identifier of the MTC UE (for example, IMSI and/or MSISDN), the APN, the equipment type and the access capability in the equipment information parameters, and then selects a corresponding core network. If the equipment is an H2H equipment terminal, the V-GW selects and provides the MME address of the existing core network to the eNodeB; if the equipment is an M2M equipment terminal, the V-GW selects and provides the M-MME address of the M2M core network to the eNodeB. The V-GW returns the selected core network address to the eNodeB.

Step 1506: after selecting for the MTC UE one M-MME serving the UE, the eNodeB forwards the attachment request to the M-MME, and meanwhile carries important information, such as the access address of the eNodeB, the identifier of the UE and so on, to the M-MME.

Step 1508: after receiving the attachment request of the MTC UE, the M-MME requests authentication data from an HSS to authenticate the MTC UE. Then, the M-MME initiates a location update request to the HSS and downloads user subscription data from the HSS; if the MTC UE has no problems such as access limit, the M-MME allows the attachment of the MTC UE, performs the subsequent attachment procedure and notifies an M-SGW/M-PGW to establish one EPS default bearer for the MTC UE.

Step 1510: the M-MME in the M2M core network sends an attachment accepted response to the eNodeB, indicating that the request of the UE for attaching to the network has been accepted, wherein the response carries the address of the Serving GW and a TEID.

Step 1512: the eNodeB sends a voice bearer establishment request to the UE, requiring the UE to store the important information of the bearer establishment and open a corresponding port. After receiving a radio bearer establishment response from the MTC UE, the eNodeB notifies the MME that the attachment procedure is completed.

It should be noted that Fig. 14 and Fig. 15 are only described by taking an attachment (access) process for example and can be applied to other service flow if no conflict is caused.

According to the embodiments above, an M2M core network is overlapped in the existing core network to share the existing radio access network. The eNodeB in the radio access network inquires the access address of the core network from the V-GW, judges whether the access equipment is H2H equipment or M2M equipment according to relevant information carried by the terminal (for example, indications such as IMSI, MSISDN, APN, equipment type and access capability and so on), and then selects a corresponding core network address to accomplish the subsequent access processes, thereby achieving the effect of occupying no existing core network resources and optimizing the network flow, and meeting the requirement of M2M applications.

Preferably, for the Mode 3, the network element is a virtual gateway and the virtual gateway serves as a proxy server, then Step 1106 can further comprise the following processes:
(1) the virtual gateway selects a corresponding third core network address for the terminal equipment according to information of a preconfigured corresponding relationship between the terminal equipment identity and the M2M core network; and
(2) the virtual gateway initiates an access request to the corresponding M2M core network according to the third core network address.

During a specific implementation process, after the corresponding M2M core network completes the access process, the following process can be further included: the virtual gateway receives an access accepted response from the M2M core network; the virtual gateway returns the access accepted response to the radio access network; and the virtual gateway forwards a subsequent signaling message interacted between the radio access network and the M2M core network.

Specifically, according to the Mode 3 of the above three implementation modes, no change is made to the radio access network. However, this solution needs to add a virtual gateway logic network element, which is adopted to select the core network and complete the signaling interaction between the radio access network and the core network. The V-GW needs to have a capability of distinguishing the H2H terminal from the M2M terminal and selecting a corresponding core network address (that is, the third core network address). In this solution, for the radio access network, the V-GW is equivalent to a core network configured inside the radio access network; all signaling needing to be transmitted to the core network from the radio access network is directly transmitted to the V-GW, which then forwards the signaling to the corresponding core network. In this solution, for the core network, the V-GW is equivalent to a radio access network; all signaling needing to be transmitted to the radio access network from the core network is directly transmitted to the V-GW, which then forwards the signaling to the corresponding radio access network. Necessary processes are described below.

Fig. 16 shows a flowchart of an MTC UE performing an attachment procedure to an M2M core network through an existing radio access network by adopting Mode 3 in a GPRS network according to an Embodiment 5 of the present invention. As shown in Fig. 16, in the GPRS network, an M2M core network is overlapped in the existing core network to share the existing radio access network. After receiving an attachment request from the MTC UE, the radio access network forwards the attachment request to a V-GW; the V-GW can judge whether the equipment is H2H equipment or M2M equipment according to relevant information carried by the terminal (for example, indications such as IMSI, MSISDN, APN, equipment type, access capability and so on), and then select a corresponding core network address and send the attachment request to the selected core network. After completing the attachment related process of the MTC UE, the core network sends an attachment accepted message to the V-GW which then forwards the attachment accepted message to the radio access network to accomplish the subsequent access processes. The specific process above can further comprise the following steps (Step 1602 to Step 1616).

Step 1602: the MTC UE initiates an attachment request message to the radio access network, wherein the attachment message needs to carry the identifier of the MTC UE (for example, IMSI, MSISDN and the like). Equipment information parameters can also be added in the attachment request message through parameter extension.

Step 1604: the radio access network selects for the MTC UE one V-GW serving the MTC UE and forwards the attachment request to the V-GW.

The V-GW can be integrated with the radio access network physically, also can be configured as a separate physical entity.

Step 1606: the V-GW judges whether the equipment is M2M equipment or H2H equipment according to indications, carried in the attachment message, such as the identifier of the MTC UE (for example, IMSI and/or MSISDN), the equipment type and the access capability in the equipment information parameters, and then selects a corresponding core network. If the equipment is an H2H equipment terminal, the V-GW selects the address of the existing core network; if the equipment is an M2M equipment terminal, the V-GW selects the M2M core network address.

Step 1608: the V-GW selects for the MTC UE one M2M core network serving the MTC UE and then sends the attachment request to a selected M-SGSN, wherein the attachment request carries important information such as the address of the V-GW, the identifier of the UE, the equipment type of the UE and so on.

Step 1610: after receiving the attachment request of the MTC UE, the M2M core network would request authentication data from an HLR to authenticate the MTC UE. Then, the M2M core network initiates a location update request to the HLR and downloads user subscription data from the HLR; if the MTC UE has no problems such as access limit, the M2M core network allows the attachment of the MTC UE and performs the subsequent attachment procedure (for example, the M-SGSN can apply to the M-GGSN for operations such as the establishment of a PDP context).

Step 1612: the M2M core network allows the access of the MTC UE and returns an attachment accepted message to the V-GW

Step 1614: the V-GW forwards the attachment accepted message to the radio access network.

Step 1616: the radio access network returns the attachment accepted message to the MTC UE to notify that the MTC UE has been attached to the GPRS network.

Fig. 17 shows a flowchart of an MTC UE performing an attachment procedure to an M2M core network through an existing radio access network by adopting Mode 3 in an EPS network according to an Embodiment 6 of the present invention. As shown in Fig. 17, in the EPS network, an M2M core network is overlapped in the existing core network to share the eNodeB in the existing radio access network. After receiving an attachment request from the MTC UE, the eNodeB forwards the attachment request to a V-GW; then the V-GW can judge whether the equipment is H2H equipment or M2M equipment according to relevant information carried by the terminal (for example, indications such as IMSI, MSISDN, APN, equipment type, access capability and so on), and then select a corresponding core network address and send the attachment request to the selected core network. After completing the attachment related process of the MTC UE, the core network sends an attachment accepted message to the V-GW which then forwards the attachment accepted message to the eNodeB in the radio access network to accomplish the subsequent access processes. The specific process above can further comprise the following steps (Step 1702 to Step 1716).

Step 1702: in order to access the EPS network, the UE initiates a network attachment request message to the eNodeB, wherein the request message carries information such as IMSI, APN, equipment type indication, network access capability of the UE, indication of requesting allocation of IP and so on.

Step 1704: the eNodeB selects for the MTC UE one V-GW serving the MTC UE and forwards the attachment request to the V-GW

The V-GW can be integrated with the radio access network physically, also can be configured as a separate physical entity, namely, an independent network element located outside the radio access network.

Step 1706: the V-GW judges whether the equipment is M2M equipment or H2H equipment according to information, carried in the attachment message, such as the identifier of the MTC UE (for example, IMSI and/or MSISDN), or the APN, or indications such as the equipment type and the access capability in the equipment information parameters, and then selects a corresponding core network. If the equipment is an H2H equipment terminal, the V-GW selects the MME address of the existing core network; if the equipment is an M2M equipment terminal, the V-GW selects the M-MME address of the M2M core network address.

Step 1708: the V-GW selects for the MTC UE one M-MME serving the MTC UE and then forwards the attachment request to the MME, and meanwhile carries important information, such as the access address of the V-GW, the identifier of the UE and so on, to the MME.

Step 1710: after receiving the attachment request of the MTC UE, the M-MME requests authentication data from an HSS to authenticate the MTC UE. Then, the M-MME initiates a location update request to the HSS and downloads user subscription data from the HSS; if the MTC UE has no problems such as access limit, the M-MME allows the attachment of the MTC UE, performs the subsequent attachment procedure and notifies an M-SGW/M-PGW to establish one EPS default bearer for the MTC UE.

Step 1712: the M-MME in the M2M core network sends an attachment accepted response to the V-GW, indicating that the request of the UE for attaching to the network has been accepted, wherein the response carries the address of the Serving GW and a TEID.

Step 1714: the V-GW forwards the attachment accepted message to the eNodeB in the radio access network.

Step 1716: after receiving the attachment accepted response, the eNodeB sends a voice bearer establishment request to the UE, requiring the UE to store the important information of the bearer establishment and open a corresponding port. After receiving a radio bearer establishment response from the MTC UE, the eNodeB notifies the MME that the attachment procedure is completed.

It should be noted that Fig. 16 and Fig. 17 are only described by taking an attachment (access) process for example and can be applied to other service flow if no conflict is caused. The V-GW, located between the radio access network and the core network, is used for forwarding related signalling information.

According to the embodiments above, an M2M core network is overlapped in the existing core network to share the existing radio access network. After receiving an attachment request from the MTC UE, the radio access network forwards the attachment request to a V-GW; then the V-GW can judge whether the equipment is H2H equipment or M2M equipment according to relevant information carried by the terminal (for example, IMSI, MSISDN, APN, indications such as equipment type, access capability and so on), and then select a corresponding core network address and send the attachment request to the selected core network. After completing the attachment related process of the MTC UE, the core network sends an attachment accepted message to the V-GW which then forwards the attachment accepted message to the eNodeB in the radio access network, to accomplish the subsequent access processes. Thus, the effect of occupying no existing core network resources and optimizing the network flow, and meeting the requirement of M2M applications is achieved.

To sum up, by means of the above embodiments provided by the present invention, when a huge number of M2M terminals access a network, the network operator can deploy a dedicated M2M core network to meet the requirements of the M2M services. When the M2M terminal accesses the network, the radio access network can identify the M2M terminal according to the equipment type or/and the access capability and select a corresponding M2M core network. The radio access network also can identify the M2M terminal and select a corresponding M2M core network through the virtual gateway, thereby achieving the effect of occupying no existing core network resources and optimizing the network flow, and meeting the requirement of M2M applications.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within the principle of the present invention are all included in the scope of the protection of the present invention.

## Claims

1. A method for implementing an access to a Machine to Machine, M2M, core network through a radio access network, comprising:
receiving, by a network element, an access request message carrying equipment identity indication information, wherein the access request message is initiated by terminal equipment (S1102);
determining, by the network element, that the terminal equipment is M2M equipment according to the equipment identity indication information (S1104); and
selecting, by the network element, a corresponding M2M core network for the terminal equipment to implement the access of the terminal equipment (S1106)
wherein the network element comprises a virtual gateway, V-GW, serving as a proxy server located between the radio access network and the core network and making a distinction between M2M devices accessing a M2M core network and Human to Human, H2H, devices accessing a H2H core network based on unique identification information;
wherein
the step of selecting, by the virtual gateway, the corresponding M2M core network for the terminal equipment to implement the access of the terminal equipment comprises: selecting, by the virtual gateway, a corresponding third core network address for the terminal equipment according to information of a preconfigured corresponding relationship between a terminal equipment identity and the M2M core network; and initiating, by the virtual gateway, an access request to the corresponding M2M core network according to the third core network address,
wherein the step of determining, by the network element, that the terminal equipment is M2M equipment according to the equipment identity indication information (S1104) comprises:
the V-GW judges whether the equipment is M2M equipment or H2H equipment according to the information carried in the access request message, wherein if the equipment is an H2H equipment terminal, the V-GW selects a MME address of the H2H core network; and if the equipment is an M2M equipment terminal, the V-GW selects a M-MME address of the M2M core network.

2. The method according to claim 1, **characterized in that** the equipment identity indication information comprises at least one of the following:
equipment type information, equipment access capability information and equipment identification information.

3. The method according to claim 1, **characterized in that** before the step of selecting, by the virtual gateway, the corresponding third core network address for the terminal equipment, the method further comprises:
after the radio access network receives the access request message from the terminal equipment, requesting, by a network element in the radio access network, the third core network address from the virtual gateway.

4. The method according to claim 1, **characterized in that** after the corresponding M2M core network finishes an access process, the method further comprises:
receiving, by the virtual gateway, an access accepted response from the M2M core network;
returning, by the virtual gateway, the access accepted response to the radio access network; and
forwarding, by the virtual gateway, a subsequent signaling message interacted between the radio access network and the M2M core network.

5. An apparatus for implementing an access to an M2M core network through a radio access network, comprising:
a receiving unit (1), configured to receive an access request message carrying equipment identity indication information, wherein the access request message is initiated by terminal equipment;
a determination unit (2), configured to determine that the terminal equipment is M2M equipment according to the equipment identity indication information; and
an implementation unit (3), configured to select a corresponding M2M core network for the terminal equipment to implement the access of the terminal equipment;
wherein the apparatus comprises a virtual gateway, V-GW, serving as a proxy server located between the radio access network and the core network and making a distinction between M2M devices accessing a M2M core network and H2H devices accessing a H2H core network based on unique identification information;
wherein
the implementation unit comprises: a third selection module (40), configured to select a corresponding third core network address for the terminal equipment according to information of a preconfigured corresponding relationship between a terminal equipment identity and the M2M core network; and a second access request module (42), configured to initiate an access request to the corresponding M2M core network according to the third core network address,
wherein the apparatus judges whether the equipment is M2M equipment or H2H equipment according to the information carried in the access request message, wherein if the equipment is an H2H equipment terminal, the apparatus selects a MME address of the H2H core network; and if the equipment is an M2M equipment terminal, the apparatus selects a M-MME address of the M2M core network.

6. The apparatus according to claim 5, **characterized in that**
the apparatus is further configured to serve as a proxy server to forward a signaling message between the radio access network and the M2M core network.

7. The apparatus according to any one of claims 5 to 6, **characterized in that**
the apparatus is an independent network element arranged outside the radio access network.

## Patentansprüche

1. Verfahren zum Implementieren eines Zugangs zu einem Maschine-zu-Maschine(M2M)-Kernnetzwerk über ein Funkzugangsnetzwerk, umfassend:
Empfangen, über ein Netzwerkelement, einer Zugangsanforderungsnachricht, die Informationen zur Angabe der Geräteidentität enthält, wobei die Zugangsanforderungsnachricht von einem Endgerät (S1102) initiiert wird;
Ermitteln, durch das Netzwerkelement, dass das Endgerät ein M2M-Gerät gemäß den Informationen zur Angabe der Geräteidentität (S1104) ist; und
Auswählen, durch das Netzwerkelement, eines entsprechenden M2M-Kernnetzwerks für das Endgerät, um den Zugang des Endgeräts (S1106) zu implementieren;
wobei das Netzwerkelement ein virtuelles Gateway, V-GW, umfasst, das als Proxy-Server dient, der sich zwischen dem Funkzugangsnetzwerk und dem Kernnetzwerk befindet und zwischen M2M-Vorrichtungen, die auf ein M2M-Kernnetzwerk zugreifen, und Mensch-zu-Mensch(H2H)-Vorrichtungen, die auf ein H2H-Kernnetzwerk zugreifen, basierend auf eindeutigen Identifikationsinformationen unterscheidet;
wobei der Schritt des Auswählens, durch das virtuelle Gateway, des entsprechenden M2M-Kernnetzwerks für das Endgerät, um den Zugriff des Endgeräts zu implementieren, umfasst: Auswählen, durch das virtuelle Gateway, einer entsprechenden dritten Kernnetzwerkadresse für das Endgerät gemäß der Information einer vorkonfigurierten entsprechenden Beziehung zwischen einer Endgeräteidentität und dem M2M-Kernnetzwerk; und Initiieren, durch das virtuelle Gateway, einer Zugriffsanforderung an das entsprechende M2M-Kernnetzwerk gemäß der dritten Kernnetzwerkadresse,
wobei der Schritt des Ermittelns, durch das Netzwerkelement, dass das Endgerät ein M2M-Gerät ist, gemäß den Informationen zur Angabe der Geräteidentität (S1104) umfasst: das V-GW bewertet, ob das Gerät ein M2M-Gerät oder ein H2H-Gerät ist, gemäß den Informationen, die in der Zugriffsanforderungsnachricht übertragen werden, wobei, wenn das Gerät ein H2H-Endgerät ist, das V-GW eine MME-Adresse des H2H-Kernnetzwerks auswählt; und wenn das Gerät ein M2M-Endgerät ist, das V-GW eine M-MME-Adresse des M2M-Kernnetzwerks auswählt.

2. Verfahren nach Anspruch 1, **dadurch gekennzeichnet, dass** die Informationen zur Angabe der Geräteidentität zumindest eines der Folgenden umfassen:
Informationen zum Gerätetyp, Informationen zur Gerätezugangsfähigkeit und Informationen zur Geräteidentifizierung.

3. Verfahren nach Anspruch 1, **dadurch gekennzeichnet, dass** das Verfahren vor dem Schritt des Auswählens, durch das virtuelle Gateway, der entsprechenden; dritten Kernnetzwerkadresse für das Endgerät ferner umfasst:
nachdem das Funkzugangsnetzwerk die Zugangsanforderungsnachricht von dem Endgerät empfängt, Anfordern der dritten Kernnetzwerkadresse von dem virtuellen Gateway über ein Netzwerkelement in dem Funkzugangsnetzwerk.

4. Verfahren nach Anspruch 1, **dadurch gekennzeichnet, dass** das Verfahren, nachdem das entsprechende M2M-Kernnetzwerk einen Zugangsprozess beendet hat, ferner umfasst:
Empfangen, über das virtuelle Gateway, einer von dem M2M-Kernnetzwerk akzeptierten Zugangsantwort;
Rückgabe, durch das virtuelle Gateway, der akzeptierten Zugangsantwort an das Funkzugangsnetzwerk; und
Weiterleiten, durch das virtuelle Gateway, einer nachfolgenden Signalisierungsnachricht, die zwischen dem Funkzugangsnetzwerk und dem M2M-Kernnetzwerk interagiert.

5. Vorrichtung zum Implementieren eines Zugangs zu einem M2M-Kernnetzwerk über ein Funkzugangsnetzwerk, umfassend:
eine Empfangseinheit (1), die zum Empfangen einer Zugangsanforderungsnachricht konfiguriert ist, die Informationen zur Angabe der Geräteidentität enthält, wobei die Zugangsanforderungsnachricht von einem Endgerät initiiert wird;
eine Ermittlungseinheit (2), die zum Ermitteln konfiguriert ist, dass das Endgerät gemäß den Informationen zur Angabe der Geräteidentität ein M2M-Gerät ist; und
eine Implementierungseinheit (3), die zum Auswählen eines entsprechenden M2M-Kernnetzwerks für das Endgerät konfiguriert ist, um den Zugang des Endgeräts zu implementieren;
wobei die Vorrichtung ein virtuelles Gateway, V-GW, umfasst, das als Proxy-Server dient, der sich zwischen dem Funkzugangsnetzwerk und dem Kernnetzwerk befindet und zwischen M2M-Vorrichtungen, die auf ein M2M-Kernnetzwerk zugreifen, und H2H-Vorrichtungen, die auf ein H2H-Kernnetzwerk zugreifen, basierend auf eindeutigen Identifikationsinformationen unterscheidet;
wobei die Implementierungseinheit umfasst: ein drittes Auswahlmodul (40), das zum Auswählen einer entsprechenden dritten Kernnetzwerkadresse für das Endgerät gemäß den Informationen einer vorkonfigurierten entsprechenden Beziehung zwischen einer Endgeräteidentität und dem M2M-Kernnetzwerk konfiguriert ist; und ein zweites Zugangsanforderungsmodul (42), das zum Initiieren einer Zugangsanforderung zu dem entsprechenden M2M-Kernnetzwerk gemäß der dritten Kernnetzwerkadresse konfiguriert ist,
wobei die Vorrichtung gemäß den in der Zugangsanforderungsnachricht übermittelten Informationen bewertet, ob das Gerät ein M2M-Gerät oder ein H2H-Gerät ist,
wobei, wenn das Gerät ein H2H-Endgerät ist, die Vorrichtung eine MME-Adresse des H2H-Kernnetzwerks auswählt; und wenn das Gerät ein M2M-Endgerät ist, die Vorrichtung eine M-MME-Adresse des M2M-Kernnetzwerks auswählt.

6. Vorrichtung nach Anspruch 5, **dadurch gekennzeichnet, dass** die Vorrichtung ferner derart konfiguriert ist, dass sie als Proxy-Server dient, um eine Signalisierungsnachricht zwischen dem Funkzugangsnetzwerk und dem M2M-Kernnetzwerk weiterzuleiten.

7. Vorrichtung nach einem der Ansprüche 5 bis 6, **dadurch gekennzeichnet, dass** die Vorrichtung ein unabhängiges Netzwerkelement ist, das außerhalb des Funkzugangsnetzwerks angeordnet ist.

## Revendications

1. Procédé de mise en œuvre d'un accès à un cœur de réseau machine à machine, M2M, via un réseau d'accès radio, comprenant :
la réception, par un élément de réseau, d'un message de demande d'accès contenant des informations d'indication d'identité d'équipement, dans lequel le message de demande d'accès est lancé par un équipement terminal (S1102) ;
le fait que l'élément de réseau détermine que l'équipement terminal est un équipement M2M selon les informations d'indication d'identité d'équipement (S1104) ; et
la sélection, par l'élément de réseau, d'un cœur de réseau M2M correspondant pour l'équipement terminal afin de mettre en œuvre l'accès de l'équipement terminal (S1106) dans lequel l'élément de réseau comprend une passerelle virtuelle, V-GW, servant de serveur mandataire situé entre le réseau d'accès radio et le cœur de réseau et faisant une distinction entre des dispositifs M2M accédant à un cœur de réseau M2M et des dispositifs humain à humain, H2H, accédant à un cœur de réseau H2H sur la base d'informations d'identification uniques ;
dans lequel l'étape de sélection, par la passerelle virtuelle, du cœur de réseau M2M correspondant pour l'équipement terminal afin de mettre en œuvre l'accès de l'équipement terminal comprend : la sélection, par la passerelle virtuelle, d'une troisième adresse de cœur de réseau correspondante pour l'équipement terminal selon des informations d'une relation correspondante préconfigurée entre une identité d'équipement terminal et le cœur de réseau M2M ; et le lancement, par la passerelle virtuelle, d'une demande d'accès au cœur de réseau M2M correspondant selon la troisième adresse de cœur de réseau, dans lequel l'étape de détermination, par l'élément de réseau, du fait que l'équipement terminal est un équipement M2M selon les informations d'indication d'identité d'équipement (S1104) comprend : le V-GW évalue si l'équipement est un équipement M2M ou un équipement H2H selon les informations contenues dans le message de demande d'accès, dans lequel, si l'équipement est un équipement terminal H2H, le V-GW sélectionne une adresse MME du cœur de réseau H2H ; et si l'équipement est un terminal d'équipement M2M, le V-GW sélectionne une adresse M-MME du cœur de réseau M2M.

2. Procédé selon la revendication 1, **caractérisé en ce que** les informations d'indication d'identité d'équipement comprennent au moins l'un des éléments suivants :
des informations de type d'équipement, des informations de capacité d'accès à l'équipement et des informations d'identification d'équipement.

3. Procédé selon la revendication 1, **caractérisé en ce que**, avant l'étape de sélection, par la passerelle virtuelle, de la troisième adresse de cœur de réseau correspondante pour l'équipement terminal, le procédé comprend en outre :
après que le réseau d'accès radio reçoit le message de demande d'accès depuis l'équipement terminal, la demande, par un élément de réseau dans le réseau d'accès radio, de la troisième adresse de cœur de réseau depuis la passerelle virtuelle.

4. Procédé selon la revendication 1, **caractérisé en ce que**, après que le cœur de réseau M2M correspondant termine un processus d'accès, le procédé comprend en outre :
la réception, par la passerelle virtuelle, d'une réponse acceptée d'accès depuis le cœur de réseau M2M ;
le retour, par la passerelle virtuelle, de la réponse acceptée d'accès vers le réseau d'accès radio ; et
le transfert, par la passerelle virtuelle, d'un message de signalisation ultérieur échangé entre le réseau d'accès radio et le cœur de réseau M2M.

5. Appareil de mise en œuvre d'un accès à un cœur de réseau M2M via un réseau d'accès radio, comprenant :
une unité de réception (1), configurée pour recevoir un message de demande d'accès contenant des informations d'indication d'identité d'équipement, dans lequel le message de demande d'accès est lancé par un équipement terminal ;
une unité de détermination (2), configurée pour déterminer que l'équipement terminal est un équipement M2M selon les informations d'indication d'identité d'équipement ; et
une unité de mise en œuvre (3), configurée pour sélectionner un cœur de réseau M2M correspondant pour l'équipement terminal afin de mettre en œuvre l'accès de l'équipement terminal ; dans lequel l'appareil comprend une passerelle virtuelle, V-GW, servant de serveur mandataire situé entre le réseau d'accès radio et le cœur de réseau et faisant une distinction entre des dispositifs M2M accédant à un cœur de réseau M2M et des dispositifs H2H accédant à un cœur de réseau H2H sur la base d'informations d'identification uniques ;
dans lequel l'unité de mise en œuvre comprend : un troisième module de sélection (40), configuré pour sélectionner une troisième adresse de cœur de réseau correspondante pour l'équipement terminal selon des informations d'une relation correspondante préconfigurée entre une identité d'équipement terminal et le cœur de réseau M2M ; et un deuxième module de demande d'accès (42), configuré pour lancer une demande d'accès au cœur de réseau M2M correspondant selon la troisième adresse de cœur de réseau, dans lequel l'appareil évalue si l'équipement est un équipement M2M ou un équipement H2H selon les informations contenues dans le message de demande d'accès,
dans lequel, si l'équipement est un terminal d'équipement H2H, l'appareil sélectionne une adresse MME du cœur de réseau H2H ; et si l'équipement est un terminal d'équipement M2M, l'appareil sélectionne une adresse M-MME du cœur de réseau M2M.

6. Appareil selon la revendication 5, **caractérisé en ce que** l'appareil est en outre configuré pour servir de serveur mandataire pour transférer un message de signalisation entre le réseau d'accès radio et le cœur de réseau M2M.

7. Appareil selon l'une quelconque des revendications 5 à 6, **caractérisé en ce que** l'appareil est un élément de réseau indépendant disposé en dehors du réseau d'accès radio.
